Europäisches Patentamt

European Patent Office

Office européen des brevets

(19)

(11) EP 0 864 530 A2

(12) **EUROPÄISCHE PATENTANMELDUNG**

(43) Veröffentlichungstag:
16.09.1998 Patentblatt 1998/38

(51) Int. Cl.⁶: $C01B\ 11/02$, $C02F\ 1/76$

(21) Anmeldenummer: 98103130.5

(22) Anmeldetag: 23.02.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 15.03.1997 DE 19710826

(71) Anmelder: Rennerfelt, Lars
95010 Boxholm (SE)

(72) Erfinder: Rennerfelt, Lars
95010 Boxholm (SE)

(74) Vertreter:
Hoffmeister, Helmut, Dr. Dipl.-Phys.
Patentanwalt
Goldstrasse 36
48147 Münster (DE)

Bemerkungen:
Die Bezugnahmen auf die Zeichnung gelten als gestrichen (Regel 43 EPÜ).

(54) **Verfahren zur Herstellung einer wässrigen Chlordioxid-Lösung zum Desinfizieren von Roh- und Abwasser**

(57)     Die Erfindung betrifft ein Verfahren zur Herstellung einer wäßrigen Chlordioxid-Lösung, mit einem Gehalt an einem als Flockungsmittel dienenden Eisen(III)-Hydrolyseprodukt, bei dem als Ausgangssubstanzen Alkalichlorit- oder chlorat und ein Eisen(III)-Salz verwendet werden. Um eine stabile Lösung zu erhalten, wird eine konzentrierte wäßrige, stark saure Lösung des Fe(III)-Salzes hergestellt, ohne daß eine Hydrolyse der Eisen(III)-Ionen eintritt, und dieser wäßrigen, stark sauren Lösung dann Alkalichlorit bzw. -chlorat beigemischt wird und die dabei erhaltene lagerstabile Mischung derart mit Wasser verdünnt, daß sich der pH-Wert auf 1 bis 6 vorzugsweise auf 3 bis 6 erhöht.

EP 0 864 530 A2

**Beschreibung**

Die Erfindung betrifft ein Verfahren zur Herstellung einer wäßrigen Chlordioxid-Lösung mit einem Gehalt an einem als Flockungsmittel dienenden Eisen(III)-Hydrolyseprodukt, bei dem als Ausgangssubstanzen Alkalichlorit oder -chlorat und ein Eisen(III)-Salz verwendet werden.

Die genannte Chlordioxid-Lösung dient insbesondere zum Desinfizieren von Roh- und Abwasser. Die Erfindung bezieht sich außerdem auf eine Vorrichtung zur Durchführung des Verfahrens und auf die Verwendung einer nach dem Verfahren hergestellten Chlordioxid-Lösung.

Es ist bekannt, Chlordioxid als stark oxidierendes Gas keimreduzierend bei der "Chlorierung" von Wässern einzusetzen. Chlordioxid ist in Wasser verhältnismäßig beständig. Nach abgeschlossener Zehrung läßt sich im behandelten Wasser ein Überschuß über längere Zeit aufrechterhalten. Als Ausgangsmaterial zur Herstellung von Chlordioxid werden, wie bekannt, beispielsweise Natriumchlorit ($NaClO_2$), Chlorgas ($Cl_2$) und Salzsäure ($HCl$) verwendet.

Bei einem bekannten Verfahren (vgl. Lehr- und Handbuch der Abwassertechnik, Band IV: Biologisch-chemische und weitergehende Abwasserreinigung; herausgegeben von der Abwassertechnischen Vereinigung e.V. in St. Augustin, Verlag für Architektur und technische Wissenschaften, Berlin, dritte überarbeitete Auflage, Seiten 461 und 462) dienen in einer Chlordioxid-Anlage zur Herstellung von Chlordioxid Natriumchlorit und Chlorgas, wobei aus der handelsüblichen Natriumchlorit-Lösung durch eine stark saure Chlorlösung das Chlordioxid freigesetzt wird. Die Chlordioxid-Anlage kann auch so eingestellt werden, daß sie eine reine Chlordioxid-Lösung bereitet. Die auf Seite 462 (a.a.O.) dargestellte Chlordioxid-Bereitungs- und Dosieranlage der Firma Wallace & Tiernan GmbH erfordert die Bereitstellung von Chlorgas, wobei eine stöchiometrische Dosierung relativ schwierig und aufwendig ist.

Weiterhin ist ein Verfahren bekannt, stabilisierte Chlordioxid-Lösungen aus festen trockenen Ausgangsstoffen herzustellen, indem ein festes Alkali- oder Erdalkalimetallchlorit und ein Eisen(III)-Salz, wie Eisen(III)-Sulfat, in dem zu behandelnden Wasser gelöst werden (vergl. DE 195 18 464 A1). Diese Herstellungsart erfordert jedoch ein Anmischen von trockenen Reagentien für jede Einzelanwendung.

Es stellt sich die Aufgabe, ein Verfahren zur Herstellung einer wäßrigen Chlordioxid-Lösung, insbesondere zum Desinfizieren von Roh- und Abwasser, anzugeben, bei der auf die Verwendung von reinem Chlorgas und Salzsäure verzichtet werden kann und bei dem eine wäßrige stabile Lösung als Chemikalie praktisch unmittelbar zur Desinfektion zur Verfügung steht.

Ein solches Verfahren ist dadurch gekennzeichnet, daß

- eine konzentrierte wäßrige, stark saure Lösung des Fe(III)-Salzes hergestellt wird, ohne daß eine Hydrolyse der Fe(III)-Ionen eintritt,
- dieser wäßrigen, stark sauren Lösung dann Alkalichlorit bzw. -chlorat beigemischt wird und die dabei erhaltene lagerstabile Mischung derart mit Wasser verdünnt wird, daß sich der pH-Wert auf 1 bis 6 erhöht.

Das neue Verfahren bietet damit zwei wesentliche Vorteile:

Einmal kann auf die Anwendung von Chlorgas und Salzsäure verzichtet werden; zum anderen werden an sich bekannte Substanzen, Fe(III)-Salze mit einem Alkalichlorit oder -clorat, gemischt und ergeben eine lagerstabile konzentrierte Lösung, so daß sie im Prinzip in beliebiger Menge in Vorrat gehalten werden kann.

Erst bei tatsächlichem Einsatz und Bedarf wird die Mischung derart mit Wasser verdünnt, daß sich ein pH-Wert im Bereich pH 1 bis 6 einstellt. Infolgedessen tritt eine Hydrolyse der Fe(III)-Ionen ein. Unter dieser Hydrolyse versteht man eine chemische Reaktion, bei der Fe(III)-Salze, insbesondere der starken Säuren, ein Eisenhydroxyd bzw. Eisenhydroxydhydrat, das kolloid gelöst bleibt, entstehen läßt. Zusätzlicher Vorteil bei der Wasserreinigung ist die Fähigkeit der Fe(III)- und sich bildender höherwertiger Eisen-Ionen, sogenannte Hydro- oder Aquokomplexe zu bilden, was dazu genutzt werden kann (wie an sich bekannt), daß sich an die Fe(III)-Ionen bindende Verunreinigungen gefällt und ausgeflockt werden.

Eisen-Verbindungen, insbesondere Fe(III)-Verbindungen, werden in großem Umfang auch zur Wasserbehandlung als Flockungs- und Fällungsmittel eingesetzt. Es wird in aller Regel eine konzentrierte Lösung geliefert und gelagert. Diese Lösung ist stark sauer und hat einen pH-Wert von unter Null.

Zwar ist bekannt, daß aus feuchten Mischungen von $KClO_3$ mit $FeCl_3$ beim Erwärmen $ClO_2$ und $Cl$ entweichen (vgl. Z. Anorg. Ch 125, 1922, 177). Diese Reaktion ist in der beschriebenen Form nicht zur Lösung der hier vorliegenden Aufgabe geeignet, da sich Chlorgas entwickelt, was an sich unerwünscht ist. Außerdem kann das involvierte Eisensalz nicht zur Wasserreinigung verwendet werden.

Eine konzentrierte Lösung von Fe(III)-Salzen, der Alkalichlorit oder -chlorat, vorzugsweise Natriumchlorit oder -chlorat, zugesetzt wird, ist überraschend stabil und lagerfähig, wenn eine ausreichende hohe Konzentration beibehalten wird.

Die Wasserbehandlung erfolgt mit stark verdünnten Fe(III)Lösungen, die einen pH-Wert im neutralen Bereich haben, d.h. einen pH-Wert, der etwa bei 6 bis 8, äußerstenfalls 9, liegen kann. Fe(III) hydrolysiert dann unter Bildung

von Fe(OH)$_3$ und den entsprechenden Säureäquivalenten (H$^+$-Ionen). Erst bei Verdünnung mit Wasser setzt die Hydrolyse des Fe(III)-Iones ein und führt zum gleichzeitigen Entstehen von Chlordioxid aus dem Chlorat bzw. dem Chlorit unter folgenden Gleichungen:

$$2FeCl_3 + 5NaClO_3 + 3H_2O \rightarrow 2Fe(OH)_3 + 6ClO_2 + 5NaCl \qquad (1)$$

$$4/3\ FeCl_3 + 5KClO_2 + 2H_2O \rightarrow 4/3\ Fe(OH)_3 + 4ClO_2 + 5KCl \qquad (2)$$

Wie aus den Formeln erkennbar ist, wird vorzugsweise als Fe(III)-Salz das preisgünstige FeCl$_3$ (Eisen(III)-Chlorid) verwendet.

Als Alkalimetalle kommen in erster Linie Natrium und Kalium in Frage. Auch hier ist es im wesentlichen eine Frage des Preises, welches Alkalichlorit bzw. -chlorat verwendet wird.

Vorzugsweise erfolgt eine Desinfizierung und Reinigung von Roh- und Abwasser durch direkte Zugabe der lagerstabilen Mischung aus Fe(III)-Chlorid und Natriumchlorit. Es ist aber auch möglich, daß zur Desinfizierung und Reinigung von Roh- und Abwasser eine Chlordioxid und Fe(III)-Ionen enthaltende, verdünnte wäßrige Lösung in einem separaten Reaktor hergestellt wird und die Lösung den betreffenden Wässern zugemischt wird. Durch entsprechende Verdünnung und damit Einstellung des geeigneten pH-Wertes und Einsetzen der Hydrolyse wird die Bildung von ClO$_2$ und Eisenalzen, die polynukleare Eisenkomplexe hervorrufen, ermöglicht.

Zur Erläuterung der Erfindung seien folgende <u>Beispiele</u> beschrieben:

Beispiel 1

Von einer Lösung mit 40,5 Gew.-% FeCl$_3$ und 3 Gew.-% NaClO$_3$ wurde eine konzentrierte Lösung hergestellt, bei der noch keine Hydrolyse der Fe(III)-Ionen eintritt. Je 50 mg dieser konzentrierten Lösung wurden 1 Liter Trinkwasser zudosiert. Es ergab sich eine Chlordioxidmenge durch Fe(III)-Hydrolyse und Säure/Chloratzersetzung von 1 mg pro Liter behandeltem Wasser. Gleichzeitig enthielt das Wasser pro Liter 7 mg Fe(III)-Ionen. Diese verbanden sich mit Verunreinigungen zu absinkenden Flocken, die sich auf dem Grund eines Reaktors ablagerten, wobei das überstehende Wasser dekantiert werden konnte.

Beispiel 2

Es wurde zunächst eine Lösung von 40,5 Gew.-% FeCl$_3$ und 6 Gew.-% NaClO$_3$ mit Wasser hergestellt. Diese Lösung wurde in einem Reaktor verdünnt, bis ein pH-Wert von 1,0 erreicht war. Die resultierende Lösung hatte eine FeCl$_3$-Konzentration von 2 Gew.-% und eine ClO$_2$-Konzentration von 0,24 Gew.-%.

Diese Lösung wurde einem Abwasser-Reaktionsgefäß so dosiert zugeführt, daß 3,3 g pro Liter als Mischungsverhältnis eingehalten war. Dies führte zu einem Chlordioxidgehalt von 8 mg pro Liter im Reaktionsgefäß. Gleichzeitig ergab die zudosierte Fe(III)-Ionen-Menge von 22 mg pro Liter eine gute Fällung und Flockung aus diesem Abwasser.

Beispiel 3

Es wird eine Mischung aus 42 Gew.-% FeCl$_3$ und 5 Gew.-% KClO$_2$ hergestellt.

Die Lösung wird zu 40 mg pro Liter einem Trinkwasser zudosiert. Die aus der Eisen(III)-Hydrolyse und der Säure/Chloritzersetzung resultierende Chlordioxidmenge betrug 1 mg pro Liter Wasser. Die gleichzeitig zudosierten 6 mg/L Fe(III)-Ionen waren ausreichend, um die gewünschte Flockungsreinigung des Rohwasser zu garantieren und eine ausreichende Chlordioxidmenge zum Desinfizieren zu erzeugen.

Eine Vorrichtung zur Durchführung des Verfahrens ist in der <u>Figur</u> dargestellt.

Betriebswasser wird über die Leitung 1 mit Hilfe einer Pumpe 2 in ein Reaktionsgefäß 3 eingepumpt und dort im diskontinuierlichen oder kontinuierlichen Betrieb für eine gewisse Weile stehengelassen.

Dem mit Wasser gefüllten Reaktionsgefäß 3 wird über mehrere verteilte Einspritzleitungen 4 über Kopf aus einem Vorratsbehälter 5 eine kontinuierlich angesetzte, mit Wasser verdünnte Lösung aus hydrolysierten Fe(III), Fe(III)-Ionen und Chlordioxidgas, das nach Beispiel 2 hergestellt wurde, zugeführt. Dem Vorratsbehälter 5 wird über eine Zweigleitung, gesteuert durch ein Ventil 7, von der Leitung 1 abgezweigtes Wasser nach Abflußmenge zugeführt, wobei über einen pH-Fühler 8 jeweils die Konzentration im Vorratsbehälter 5 gemessen wird. Der jeweilig geeignete pH-Wert für die ClO$_2$-Bildung wird dabei eingestellt.

Chlordioxid- und Fe(III)-Gehalt im Vorratsbehälter 5 werden eingestellt durch Zuführung von konzentrierter Mischung aus FeCl$_3$ und Natriumchlorat, die im Dosierbehälter 9 bereitgehalten wird. Mit Hilfe eines Rechnersystems 10, das Signal von den Fühlern 8 und 11 aufnimmt, werden die entsprechenden Dosierpumpen und Dosierventile 12, 13, 7 angesteuert, geöffnet und geschlossen. Nach einer ausreichenden Reaktionszeit ist aus dem Brauchwasser in dem Reaktionsgefäß 3 eine Masse an Fe(III)-Aquokomplexen ausgefällt und abgesetzt, die über eine Sumpfleitung 15 abgezogen werden kann. Das gereinigte Wasser wird über die Leitung 16, nach vorheriger Abfühlung durch den Fühler 11, abgepumpt und in das Leitungsnetz eingespeist.

Da es auch von der Qualität und Zusammensetzung des zu "chlorierenden" Wassers abhängt, welche Reaktionen eintreten, sei darauf hingewiesen, daß der Fachmann entsprechend empirisch gefundene pH-Werte zur Maximierung der $ClO_2$-Bildung suchen und einsetzen wird. Der Bereich, in dem die $ClO_2$-Bildung am schnellsten verläuft, ist erfahrungsgemäß auch der Bereich, wo die Bildung von polynuklearen, hydratisierten Eisen(III)-Komplexen gefördert wird. Diese Komplexe haben im allgemeinen eine bessere Flockungswirkung als "nackte" Fe(III)-Ionen.

**Patentansprüche**

1. Verfahren zur Herstellung einer wäßrigen Chlordioxid-Lösung, mit einem Gehalt an einem als Flockungsmittel dienenden Eisen(III)-Hydrolyseprodukt, bei dem als Ausgangssubstanzen Alkalichlorit- oder chlorat und ein Eisen(III)-Salz verwendet werden,

   dadurch gekennzeichnet, daß

   - eine konzentrierte wäßrige, stark saure Lösung des Fe(III)-Salzes hergestellt wird, ohne daß eine Hydrolyse der Eisen(III)-Ionen eintritt,
   - dieser wäßrigen, stark sauren Lösung dann Alkalichlorit bzw. -chlorat beigemischt wird und die dabei erhaltene lagerstabile Mischung derart mit Wasser verdünnt wird, daß sich der pH-Wert auf 1 bis 6 erhöht.

2. Verfahren nach Anspruch 1, dadurch gekennzeichnet, daß als Fe(III)-Salz $FeCl_3$ verwendet wird.

3. Verfahren nach Anspruch 1 oder 2, dadurch gekennzeichnet, daß als Alkalichlorit oder -chlorat Natriumchlorit oder Natriumchlorat verwendet wird.

4. Verfahren nach Anspruch 1, dadurch gekennzeichnet, daß die Verdünnung der wäßrigen Lösung bis auf den pH-Wert zwischen 1 bis 3 erfolgt.

5. Vorrichtung zur Durchführung des Verfahrens nach den Ansprüchen 1 bis 4, dadurch gekennzeichnet, daß ein Reaktionsgefäß (3) zur Wasserbehandlung mit einem Vorratsbehälter (5) für die verdünnte Lösung der konzentrierten Mischung aus Fe(III)-Ionen und Clorit- bzw. Chloratlösung über eine Dosierleitung (4) verbunden ist.

6. Verwendung der wäßrigen Chlordioxid-Lösung nach den Ansprüchen 1 bis 4 zur Desinfektion und Reinigung von Roh- oder Abwasser.

7. Verwendung der wäßrigen Chlordioxid-Lösung nach Anspruch 6, dadurch gekennzeichnet, daß eine Desinfektion und Reinigung von Roh- oder Abwasser durch direkte Zugabe der lagerstabilen Mischung zu den betreffenden Wässern eingeleitet wird.

8. Verwendung der wäßrigen Chlordioxid-Lösung nach Anspruch 6, dadurch gekennzeichnet, daß zur Desinfektion und Reinigung von Roh- oder Abwasser eine Chlordioxid und Fe(III)-Ionen enthaltende verdünnte wäßrige Lösung in einem separaten Reaktor hergestellt und die Lösung den betreffenden Wässern zugemischt wird.